# FASCICULE DE BREVET EUROPEEN

(11) **EP 0 773 518 B1**
(45) Date de publication et mention de la délivrance du brevet: **19.04.2000**
(21) Numéro de dépôt: 96402364.2
(22) Date de dépôt: 07.11.1996
(51) Int. Cl.: G07F 7/08, G07F 7/00

(54) **Dispositif de paiement électronique pour auto-tamponneuse**
Vorrichtung zum elektronischen Bezahlen für Autoscooter
Electronic payment device for dodgem car

(30) Priorité: 10.11.1995 FR 9513339
(43) Date de publication de la demande: 14.05.1997
(73) Titulaire: Groupe Gaston Reverchon International Design, G. Ride, 77920 Samois Sur Seine (FR)
(72) Inventeur: Crohin, Laurent, 77920 Samois sur Seine (FR)
(74) Mandataire: Dawidowicz, Armand

(56) Documents cités:
- EP-A- 0 232 174
- EP-A- 0 646 893
- DE-A- 2 425 639
- DE-A- 2 706 201
- FR-A- 2 386 870
- FR-A- 2 644 268
- GB-A- 2 268 610
- US-A- 3 850 299

## Description

L'invention concerne un dispositif de paiement électronique pour équiper des auto-tamponneuses.

De manière habituelle, les auto-tamponneuses sont munies de dispositif de paiement par jeton et il est nécessaire que l'utilisateur achète au préalable ses jetons afin d'utiliser les voitures. Ainsi, l'introduction du jeton et sa reconnaissance par le dispositif de paiement permettent la mise en marche des voitures pendant un tour (voir DE-A-2 425 639).

Cependant, dans ce type de dispositif, la fraude est importante car il est assez simple de reproduire des jetons similaires aux jetons vendus par le propriétaire des auto-tamponneuses et qui, une fois introduits dans le dispositif de paiement, permettent l'actionnement des auto-tamponneuses.

Le principal inconvénient de ces dispositifs de paiement par jeton réside donc dans leur reproductibilité relativement simple.

On connaît déjà, dans le domaine des machines à sous, des systèmes de paiement électronique par lecture d'une carte à puces, ce qui permet d'éviter la manipulation de jetons ou de monnaie. On inscrit alors sur la puce de ladite carte de paiement les informations relatives au crédit accordé à l'utilisateur, ledit crédit étant ensuite lu par un lecteur prévu sur les machines à sous et qui commande le fonctionnement desdites machines en fonction des informations lues par le lecteur. D'autres informations telles qu'un code personnel d'utilisation de ladite carte à puce ou un code de reconnaissance par la machine à sous permettent d'éviter les tentatives de fraude. Cependant, dans le cadre d'une utilisation de ce type de paiement électronique dans le domaine des auto-tamponneuses se pose alors le problème de la récupération des cartes à puce.

En effet, comme pour les cartes téléphoniques, un utilisateur est tenté de jeter lesdites cartes une fois utilisées. D'autre part, dans ce type d'activité ludique, l'utilisateur ne doit pas se voir imposer des contraintes telles que celle l'obligeant à rapporter une carte une fois celle-ci utilisée. Ce système de paiement électronique par carte à puce est donc peu rentable pour le propriétaire des auto-tamponneuses qui ne peut récupérer toutes les cartes en service.

Afin de pallier cet inconvénient, il convient donc de proposer un dispositif de paiement électronique pour une auto-tamponneuse qui accepte un moyen de paiement électronique déclenchant le fonctionnement de l'auto-tamponneuse et qui, tant que ledit moyen de paiement électronique présente un crédit, restitue celui-ci à l'utilisateur mais qui, une fois le crédit de l'utilisateur épuisé, permet la récupération directe dudit moyen de paiement dans le dispositif.

On connaît déjà par EP-A-0 232 174, un appareil fonctionnant à l'aide de pièces de monnaie et de jetons.

Les jetons utilisés comportent un circuit électronique renfermant une valeur correspondant au crédit accordé au jeton. Une fois dans l'appareil, les jetons sont amenés à un moyen de lecture sans contact qui permet de lire la valeur inscrite dans le jeton et de transférer cette information vers une électronique de gestion de l'appareil tandis que la valeur du jeton est mise à zéro. Si, à la fin de l'utilisation de l'appareil, l'électronique de gestion décèle une valeur de crédit restante, celle-ci est alors inscrite dans le jeton qui est rendu à l'utilisateur. Si cette valeur de crédit est nulle, le jeton est alors conservé par l'appareil.

Un tel appareil est conçu pour pouvoir fonctionner à la fois avec des pièces de monnaie et des jetons. De ce fait, il y a systématiquement une reconnaissance du jeton comme s'il était une pièce de monnaie d'une valeur définie. Cette valeur définie est reconnue en tant qu'une valeur de crédit déterminée qui est stockée dans l'appareil jusqu'à utilisation tandis qu'il y a automatiquement une mise à zéro de la valeur contenue dans le jeton. Le jeton électronique est donc juste un élément de substitution aux pièces de monnaie.

Il convient donc de proposer également un dispositif de paiement électronique dans lequel on peut lire et modifier directement les informations contenues dans un moyen de paiement électronique et ce, à chaque utilisation.

A cet effet, l'invention a pour objet un dispositif de paiement électronique pour auto-tamponneuse du type comprenant un coffret muni d'une fente d'introduction pour un moyen de paiement électronique, caractérisé en ce qu'il comporte des moyens propres à amener, à détecter et maintenir ledit moyen de paiement électronique à une position de lecture/écriture, des moyens propres à assurer la lecture desdites informations contenues par ledit moyen de paiement électronique, des moyens propres à modifier les informations contenues par ledit moyen de paiement électronique et des moyens propres à assurer l'éjection dudit moyen de paiement électronique hors de la position de lecture/écriture vers l'extérieur du dispositif lorsque le crédit est non nul et vers un logement de stockage dans ledit dispositif à péage lorsque le crédit est nul.

Ainsi, lorsque ledit moyen de paiement est introduit dans le dispositif, il est introduit jusqu'à une position correcte de lecture/écriture où il est maintenu et dans laquelle le lecteur électronique peut alors lire les informations contenues dans ledit moyen de paiement. En fonction desdites informations, le lecteur peut alors transmettre ou non un signal autorisant le déclenchement de l'auto-tamponneuse. Dans le cas où un fonctionnement de ladite auto-tamponneuse est autorisé, les informations contenues dans le moyen de paiement sont modifiées, c'est-à-dire que le crédit est diminué, par exemple, d'une unité correspondant à la valeur d'un tour de ladite auto-tamponneuse.

Lorsque le tour est terminé, si le crédit inscrit sur le moyen de paiement est non nul, celui-ci est restitué à l'utilisateur par les moyens d'éjection vers l'extérieur hors du dispositif. Par contre, si le crédit est nul, le moyen de paiement est conservé par le dispositif et envoyé vers un logement de stockage où seul le personnel autorisé pourra le récupérer.

Ainsi, la récupération du moyen de paiement est effectuée de manière sûre et efficace dès que ledit moyen de paiement affiche un crédit nul et sans que l'utilisateur puisse l'empêcher.

De préférence, le moyen de lecture électronique peut être relié à un afficheur prévu sur le tableau de bord et/ou sur une partie non exposée de l'auto-tamponneuse de telle sorte que certaines informations contenues dans le moyen de paiement électronique sont également affichées et visibles pour l'utilisateur et/ou d'autres utilisateurs et spectateurs.

Les informations sont inscrites sur le moyen de paiement par un terminal. Ainsi, une fois le moyen de paiement récupéré par le personnel autorisé, celui-ci peut être reprogrammé pour un nouvel usage. Avantageusement, outre les renseignements relatifs au crédit accordé à l'utilisateur, le moyen de paiement peut comporter d'autres informations telles que par exemple, un message publicitaire, un code personnel, un identifiant, un programme de jeu interactif. Ces derniers permettent de prévenir toute tentative de fraude dans la mesure où un moyen de paiement n'ayant pas été programmé par le terminal associé aux lecteurs des différentes auto-tamponneuses d'un même manège ou propriétaire, ne peut pas posséder le bon code personnel reconnu par lesdits lecteurs. Il est également possible, en plus ou indépendamment, de prévoir des moyens mécaniques ou électromécaniques de prévention de fraude par retenue de la carte.

Selon un mode de réalisation préféré de l'invention, les moyens de lecture sont constitués par un lecteur électronique à distance. Ainsi, de manière avantageuse, le moyen de paiement électronique peut être constitué par une mémoire ré-inscriptible et une bobine enrobées dans une résine sous forme d'un jeton.

De cette manière, on conserve l'aspect traditionnel des auto-tamponneuses fonctionnant avec des jetons et on évite également avantageusement des perturbations dans la lecture électronique, en particulier lorsque, du fait même de la destination des auto-tamponneuses, celles-ci sont soumises à des chocs et à des vibrations continuelles en fonctionnement qui peuvent entraîner des perturbations dans le fonctionnement du moyen de lecture.

Selon un autre mode de réalisation de l'invention, les moyens de lecture sont constitués par un lecteur électronique par contact électrique du type lecteur de carte à puce. Par conséquent, le jeton comportant une mémoire ré-inscriptible présente alors avantageusement au moins une pastille de contact sur ses deux faces. Afin de faciliter la mise en contact électrique des pastilles de contact avec des organes de contact du lecteur électronique, le jeton est réalisé de préférence sous forme d'une carte.

Le dispositif comporte alors, de préférence, des moyens d'amenée, de détection et de maintien du jeton en position de lecture/écriture du type des dispositifs avaleurs de cartes à puce.

Ainsi, un tel dispositif comporte des moyens d'amenée du jeton à l'intérieur du coffret permettant de le positionner correctement, c'est-à-dire permettant d'amener lesdites pastilles de contact en position correcte de contact avec les organes de contact du lecteur électronique.

Les moyens d'éjection du jeton hors du coffret pour une restitution à l'utilisateur lorsque le crédit du jeton est non nul sont constitués par les moyens d'introduction commandés en fonctionnement en sens inverse.

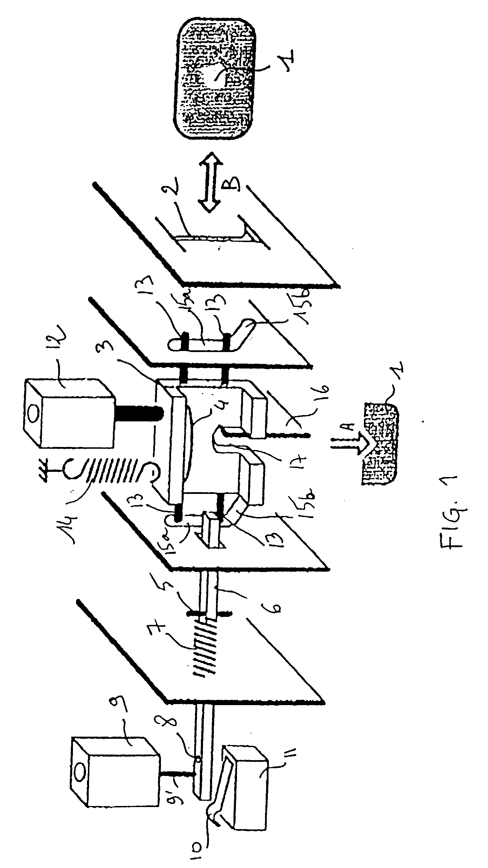

On décrira maintenant plus en détail un exemple du mode de réalisation préféré de l'invention en référence au dessin dans lequel la figure unique représente une vue schématique éclatée en perspective du dispositif.

Le dispositif est contenu dans un coffret dont l'une des parois est pourvue d'une fente d'introduction 2 à travers laquelle est inséré un jeton 1.

A l'arrière de cette fente d'introduction 2 se trouve une pièce en forme de U servant de berceau 3 au jeton 1 introduit et constituant les moyens propres à maintenir le jeton 1 en position de lecture/écriture. Le berceau 3 est positionné de telle sorte que la base du U s'étend le long de la fente d'introduction 2 qui présente une longueur correspondant à la largeur de l'espace de réception du jeton 1 défini entre les branches du U. De préférence, les dimensions de l'espace de réception et de la fente d'introduction 2 sont choisies pour correspondre exactement aux dimensions du jeton 1.

L'une des branches du U comporte en outre une lame ressort 4 en saillie vers l'intérieur de l'espace de réception contribuant au maintien du jeton 1 dans le berceau 3.

Une tige 6, constituant les moyens d'éjection du jeton 1 vers l'extérieur du dispositif et ayant un axe longitudinal correspondant à l'axe d'introduction du jeton 1 (double flèche B) fait saillie dans l'espace de réception du berceau 3 sous l'action d'un ressort 7 et d'une butée 5. A son extrémité opposée à l'extrémité en saillie dans le berceau 3, ladite tige 6 comporte un trou 8. De part et d'autre de la tige 6 se trouve un électro-aimant 9 et un détecteur 11. Aucun de ces éléments n'est actionné et on est en mode veille (voir figure unique).

Lorsque le jeton 1 est introduit dans le dispositif de paiement électronique par la fente d'introduction 2, il se loge dans l'espace de réception défini par le berceau 3 et est maintenu par la lame-ressort 4. Lors de son introduction, le jeton 1 bute contre la tige 6 et la repousse ce qui comprime le ressort 7 par l'intermédiaire de la butée 5. Lorsque ledit jeton 1 est totalement introduit dans le dispositif, l'axe 9' de l'électro-aimant 9 s'introduit dans le trou 8 de la tige 6 et verrouille ladite tige 6 dans cette position tandis que la tige 6 actionne le détecteur 11, dans ce cas en repoussant une languette 10.

Si le jeton 1 n'est pas introduit complètement dans le dispositif, la tige 6 ne peut être verrouillée et le jeton 1 est restitué à l'utilisateur sous l'effet de la poussée exercée par la tige 6 rappelée en saillie dans le berceau 3 par le ressort 7.

La position de lecture détectée par le détecteur 11 permet l'actionnement du dispositif de lecture. De préférence, cette lecture est effectuée à l'aide d'un lecteur électronique à distance solidaire du coffret de l'ensemble.

Ce lecteur à distance peut être constitué d'une antenne émettrice permettant de transmettre l'énergie au jeton, d'une antenne réceptrice, d'un microcontrôleur et d'un bloc d'alimentation. Ainsi, le lecteur génère un champ électromagnétique auquel est soumis le jeton 1 qui peut alors délivrer les informations qu'il détient et autoriser la mise en marche d'une auto-tamponneuse si le crédit inscrit sur le jeton 1 est non nul.

Ce crédit est débité sur le jeton 1 à l'inversion de polarité qui se produit à la fin du tour.

Lorsque le tour d'auto-tamponneuse s'achève, deux hypothèses sont envisageables, soit le crédit sur le jeton 1 est nul soit il est non nul.

Lorsque le crédit est décelé comme étant non nul, l'électro-aimant 9 est actionné de manière à ce que son axe se dégage du trou 8 de la tige 6 permettant au ressort 7 de ramener ladite tige en saillie dans le berceau 3 en repoussant alors le jeton 1 qui est restitué à l'utilisateur au travers de la fente d'introduction 2. Le détecteur 11 n'est plus activé et on revient au mode veille.

Lorsqu'un crédit nul est décelé, la tige 6 est maintenue dans sa position verrouillée et ce sont les moyens d'éjection vers un compartiment de récupération qui interviennent. Ainsi, on active alors un électro-aimant 12 qui a pour effet de déplacer verticalement le berceau 3 par rapport à la fente d'introduction 2 de telle sorte qu'ils ne sont plus en coïncidence l'un avec l'autre et que le mouvement vertical imposé au berceau 3 contribue à étirer un ressort 14 qui maintenait le berceau 3 en position coïncidente avec la fente d'introduction 2.

Le berceau 3 est en outre pourvu de quatre axes 13 disposés de part et d'autre de la base du U et à chacune de ses extrémités. Ces axes 13 sont engagés dans des guides 15 présentant une première partie 15a dans laquelle les axes 13 peuvent se déplacer verticalement conformément au déplacement vertical imposé par l'électro-aimant et une seconde partie 15b inclinée par rapport à la première vers l'arrière du berceau 3. Ainsi, lors de mouvement vertical imposé par l'électro-aimant, les axes 13 à une extrémité de la base du berceau 3 se déplacent dans la partie verticale 15a des guides 15 tandis que les axes 13 à l'autre extrémité du berceau 3 se déplacent dans la partie inclinée 15b des guides 15 et entraînent le pivotement dudit berceau 3 autour d'une de ses branches.

Lors du pivotement du berceau 3, une pièce d'éjection 16 fait saillie dans le berceau 3 par une ouverture 17 prévue à cet effet dans ledit berceau 3 et bute contre le jeton 1 qui est empêché de basculer avec le berceau 3, ce qui a pour effet de l'expulser hors dudit berceau 3 vers un compartiment de récupération selon la flèche A.

L'électro-aimant 12 est ensuite désactivé et le berceau 3 est rappelé à sa position initiale par le ressort 14. Puis, l'électro-aimant 9 est à son tour désactivé, son axe 9' se désengageant du trou 8 libérant la tige 6 qui se replace en saillie dans le berceau 3 sous l'effet du ressort 7. Le dispositif est à nouveau prêt pour recevoir un jeton 1.

## Revendications

1. Dispositif à péage électronique pour auto-tamponneuse, du type comprenant un coffret muni d'une fente d'introduction (2) pour un moyen de paiement électronique (1),
caractérisé en ce qu'il comporte des moyens propres à amener, à détecter et à maintenir ledit moyen de paiement électronique (1) introduit au travers de la fente d'introduction (2) dans une position de lecture/écriture, des moyens propres à assurer la lecture desdites informations contenues par ledit moyen de paiement électronique (1) en position de lecture/écriture qui, après lecture de l'information relative au crédit inscrit dans le moyen de paiement électronique transmettent ou pas un signal de déclenchement de l'auto-tamponneuse et des moyens propres à modifier les informations contenues dans ledit moyen de paiement électronique qui, en cas d'autorisation du déclenchement, modifient ledit crédit de la valeur correspondant à un tour de ladite auto-tamponneuse et des moyens propres à assurer l'éjection dudit moyen de paiement électronique (1) hors de la position de lecture/écriture vers l'extérieur du dispositif lorsque le crédit est non nul et vers un logement de récupération dans ledit dispositif lorsque le crédit est nul.

2. Dispositif selon la revendication 1,
caractérisé en ce que le moyen de lecture/écriture est constitué par un module électronique de lecture/écriture à distance.

3. Dispositif selon la revendication 2,
caractérisé en ce que le moyen de paiement électronique est constitué par une mémoire ré-inscriptible et une bobine enrobé dans une résine sous forme d'un jeton (1).

4. Dispositif selon l'une des revendications 2 à 3,
caractérisé en ce que les moyens propres à maintenir le moyen de paiement en position de lecture/écriture sont constitués par une pièce en forme de U ou berceau (3) définissant entre ses branches un espace de réception dudit moyen de paiement, le berceau (3) étant positionné derrière la fente d'introduction (2), sa base s'étendant le long de la fente d'introduction (2) de telle sorte que l'espace de réception coïncide avec la fente d'introduction (2).

5. Dispositif selon la revendication 4,
caractérisé en ce que l'espace de réception défini par le berceau (3) présente des dimensions correspondantes aux dimensions du moyen de paiement (1).

6. Dispositif selon l'une des revendications 4 et 5,
caractérisé en ce que l'une des branches du berceau (3) est pourvue d'une lame ressort (4) en saillie dans l'espace de réception.

7. Dispositif selon l'une des revendications 4 à 6,
caractérisé en ce que les moyens d'éjection du moyen de paiement vers un logement de récupération dans le dispositif comprennent quatre axes (13) disposés de part et d'autre de la base dudit berceau (3) à ses extrémités et engagés dans des guides (15), présentant une partie verticale (15a) et une partie inclinée (15b) vers l'arrière du berceau (3), de telle sorte que, sous l'action d'un électro-aimant (12) et d'un ressort (14), ledit berceau (3) pivote autour d'une de ses branches, ainsi qu'une pièce d'éjection (16) faisant saillie dans l'espace de réception dudit berceau (3) lors de son pivotement.

8. Dispositif selon l'une des revendications 4 à 6,
caractérisé en ce que les moyens d'éjection vers l'extérieur du dispositif sont constitués par une tige (6) dont une extrémité fait saillie dans l'espace de réception du berceau (3) sous l'action d'un ressort (7) et d'une butée (5) et dont l'autre extrémité comporte un trou (8) dans lequel se loge l'axe (9') d'un électro-aimant (9) lorsque la tige (6) est repoussée par un moyen de paiement introduit dans l'espace de réception du berceau (3).

9. Dispositif selon la revendication 8,
caractérisé en ce que les moyens de détection de la position de lecture/écriture du moyen de paiement sont constitués par un détecteur (11) actionné par la tige (6) lorsque celle-ci est repoussée par l'introduction d'un moyen de paiement dans l'espace de réception du berceau (3).

10. Dispositif selon la revendication 1,
caractérisé en ce que le moyen de lecture/écriture est constitué par un module électronique de lecture/écriture par contact électrique.

11. Dispositif selon la revendication 10,
caractérisé en ce que le moyen de paiement électronique est constitué par une mémoire réinscriptible intégrée dans un jeton sous forme d'une carte présentant une pastille de contact sur chaque face.

12. Dispositif selon la revendication 11,
caractérisé en ce que les moyens d'amenée sont du type avaleur de cartes à puce.

13. Dispositif selon l'une des revendications 10 à 12,
caractérisé en ce que les moyens de détection du jeton sont constitués par des contacts métalliques agencés dans le coffret pour venir en contact avec les pastilles de contact dudit jeton.

14. Dispositif selon l'une des revendications 10 à 13,
caractérisé en ce que les moyens d'éjection sont constitués par les moyens d'amenée commandés en fonctionnement inverse.

## Patentansprüche

1. Vorrichtung zum elektronischen Bezahlen für Autoscooter, umfassend ein Gehäuse mit einem Einführungsschlitz (2) für ein elektronisches Zahlungsmittel (1),
**dadurch gekennzeichnet**, daß sie Mittel umfaßt, um das besagte durch den Einführungsschlitz (2) eingeführte elektronische Zahlungsmittel (1) in eine Lese-/Schreibposition zu bringen, es darin zu erfassen und zu halten, Mittel, um das Lesen der auf dem besagten elektronischen Zahlungsmittel (1) enthaltenen Informationen in der Lese-/Schreibposition herbeizuführen, die nach dem Lesen der Information bezüglich des im elektronischen Zahlungsmittel gespeicherten Guthabens ein Signal zum Starten des Autoscooters übertragen oder nicht, und Mittel, um die in dem besagten elektronischen Zahlungsmittel gespeicherten Informationen zu ändern, die im Falle der Startfreigabe das besagte Guthaben um den Wert verändern, der einer Fahrt des besagten Autoscooters entspricht, sowie Mittel, um das Auswerfen des besagten elektronischen Zahlungsmittels (1) aus der Lese-/Schreibposition herbeizuführen, und zwar aus der Vorrichtung heraus, wenn das Guthaben ungleich null ist, und zu einer Einbehaltaufnahme in der besagten Vorrichtung, wenn das Guthaben gleich null ist.

2. Vorrichtung nach Anspruch 1,
**dadurch gekennzeichnet**, daß das Lese-/Schreibmittel aus einem elektronischen Fern-Lese-/Schreibmodul besteht.

3. Vorrichtung nach Anspruch 2,
**dadurch gekennzeichnet**, daß das elektronische Zahlungsmittel aus einem wiederbeschreibbaren Speicher und einer Wicklung besteht, die in einem Harz in Form einer Einwurfmarke (1) eingelassen sind.

4. Vorrichtung nach einem der Ansprüche 2 bis 3,
**dadurch gekennzeichnet**, daß die Mittel, um das Zahlungsmittel in der Lese-/Schreibposition zu halten, aus einem U-förmigen Teil oder einer Aufnahmemulde (3) bestehen, die zwischen ihren Schenkeln einen Aufnahmeraum für das besagte Zahlungsmittel definiert, wobei die Aufnahmemulde (3) hinter dem Einführungsschlitz (2) positioniert ist und sich ihr Fußstück entlang dem Einführungsschlitz (2) erstreckt, so daß sich der Aufnahmeraum mit dem Einführungsschlitz (2) in Übereinstimmung befindet.

5. Vorrichtung nach Anspruch 4,
**dadurch gekennzeichnet**, daß der durch die Aufnahemmulde (3) definierte Aufnahmeraum Abmessungen entsprechend den Abmessungen des Zahlungsmittels (1) aufweist.

6. Vorrichtung nach einem der Ansprüche 4 und 5,
**dadurch gekennzeichnet**, daß einer der Schenkel der Aufnahmemulde (3) mit einem in den Aufnahmeraum vorstehenden Federblatt (4) versehen ist.

7. Vorrichtung nach einem der Ansprüche 4 bis 6,
**dadurch gekennzeichnet**, daß die Auswerfmittel zum Auswerfen des Zahlungsmittels zu einer Einbehaltaufnahme in der Vorrichtung vier Zapfen (13) umfassen, die beiderseits des Fußstücks der besagten Aufnahmemulde (3) an ihren Enden angeordnet und in Führungen (15) eingesetzt sind, die einen vertikalen Teil (15a) und einen zur Rückseite der Aufnahmemulde (3) geneigten Teil (15b) aufweisen, so daß sich die besagte Aufnahmemulde (3) unter der Einwirkung eines Elektromagneten (12) und einer Feder (14) um einen ihrer Schenkel dreht, sowie ein Auswerfteil (16), das in den Aufnahmeraum der besagten Aufnahmemulde (3) bei ihrer Drehung vorsteht.

8. Vorrichtung nach einem der Ansprüche 4 bis 6,
**dadurch gekennzeichnet**, daß die Auswerfmittel zum Auswerfen aus der Vorrichtung heraus aus einem Stift (6) bestehen, von dem ein Ende in den Aufnahmeraum der Aufnahmemulde (3) unter Einwirkung einer Feder (7) und eines Anschlags (5) vorsteht und dessen anderes Ende ein Loch (8) enthält, in dem der Zapfen (9') eines Elektromagneten (9) aufgenommen ist, wenn der Stift (6) durch ein in den Aufnahmeraum der Aufnahmemulde (3) eingeführtes Zahlungsmittel zurückgeschoben wird.

9. Vorrichtung nach Anspruch 8,
**dadurch gekennzeichnet**, daß die Mittel zur Erfassung der Lese-/Schreibposition des Zahlungsmittels aus einem Detektor (11) bestehen, der durch den Stift (6) betätigt wird, wenn dieser durch die Einführung eines Zahlungsmittels in den Aufnahmeraum der Aufnahmemulde (3) zurückgeschoben wird.

10. Vorrichtung nach Anspruch 1,
**dadurch gekennzeichnet**, daß das Lese-/Schreibmittel aus einem durch elektrischen Kontakt betriebenen elektronischen Lese-/Schreibmodul besteht.

11. Vorrichtung nach Anspruch 10,
**dadurch gekennzeichnet**, daß das elektronische Zahlungsmittel aus einem wiederbeschreibbaren Speicher besteht, der in eine Einwurfmarke in Form einer Karte integriert ist, die auf jeder Seite eine Kontaktanschlußfläche aufweist.

12. Vorrichtung nach Anspruch 11,
**dadurch gekennzeichnet**, daß die Zuführmittel als Chipkarten-Aufnehmer ausgeführt sind.

13. Vorrichtung nach einem der Ansprüche 10 bis 12,
**dadurch gekennzeichnet**, daß die Erfassungsmittel zur Erfassung des Einwurfmarke aus Metallkontakten bestehen, die im Gehäuse angeordnet sind, um mit den Kontaktanschlußflächen der besagten Einwurfmarke in Kontakt zu kommen.

14. Vorrichtung nach einem der Ansprüche 10 bis 13,
**dadurch gekennzeichnet**, daß die Auswerfmittel aus den im Umkehrbetrieb betätigten Zuführmitteln bestehen.

## Claims

1. Electronic payment device for a dodgem car, of the type comprising a box provided with an introduction slot (2) for an electronic payment means (1), characterised in that it comprises means suitable for positioning, detecting and maintaining said electronic payment means (1) introduced through the introduction slot (2) in a reading/writing position, means suitable for ensuring said data contained by said electronic payment means (1) is read in the reading/writing position, which means, after reading the data relating to the credit inscribed in the electronic payment means, transmit or do not transmit a signal for activating the dodgem car, and means suitable for modifying the data contained in said electronic payment means, which means, in the case of authorising activation, modify said credit by the value corresponding to one ride on said dodgem car, as well as means suitable for ensuring that said electronic payment means (1) is ejected from the reading/writing position to the exterior of the device when the credit is not zero and to a collection housing in said device when the credit is zero.

2. Device according to claim 1, characterised in that the reading/writing means is formed by a remote electronic reading/writing module.

3. Device according to claim 2, characterised in that the electronic payment means is formed by a re-inscribable memory and a reel encased in a resin in the form of a token (1).

4. Device according to one of claims 2 to 3, characterised in that the means suitable for maintaining the payment means in the reading/writing position are formed by a U-shaped or cradle-shaped part (3), which defines between its arms a reception space for accommodating said payment means, the cradle (3) being positioned behind the introduction slot (2), its base extending along the introduction slot (2) so that the reception space coincides with the introduction slot (2).

5. Device according to claim 4, characterised in that the reception space defined by the cradle (3) has dimensions corresponding to the dimensions of the payment means (1).

6. Device according to one of claims 4 and 5, characterised in that one of the arms of the cradle (3) is provided with a flat-spring (4) projecting into the reception space.

7. Device according to one of claims 4 to 6, characterised in that the means for ejecting the payment means to a collection housing in the device comprise four pins (13), which are disposed on each side of the base of said cradle (3) at its ends and are engaged in guides (15) having a vertical part (15a) and a part (15b) inclined towards the rear of the cradle (3), so that, by the action of an electromagnet (12) and a spring (14), said cradle (3) pivots about one of its arms, as well as an ejection part (16) which projects into the reception space of said cradle (3) when it pivots.

8. Device according to one of claims 4 to 6, characterised in that the means for ejecting to the exterior of the device are formed by a bar (6), one end of which projects into the reception space of the cradle (3) by the action of a spring (7) and a stop member (5), and the other end of which comprises a hole (8) in which the pin (9') of an electromagnet (9) is housed when the bar (6) is pushed-back by a payment means introduced into the reception space of the cradle (3).

9. Device according to claim 8, characterised in that the means for detecting the reading/writing position of the payment means are formed by a detector (11) actuated by the bar (6) when the latter is pushed-back by the introduction of a payment means into the reception space of the cradle (3).

10. Device according to claim 1, characterised in that the reading/writing means is formed by an electronic module for reading/writing by electrical contact.

11. Device according to claim 10, characterised in that the electronic payment means is formed by a re-inscribable memory integrated in a token in the form of a card having a contact patch on each face.

12. Device according to claim 11, characterised in that the positioning means are of the type which absorbs silicon chip cards.

13. Device according to one of claims 10 to 12, characterised in that the means for detecting the token are formed by metallic contacts fitted in the box to come into contact with the contact patches of said token.

14. Device according to one of claims 10 to 13, characterised in that the ejection means are formed by positioning means controlled by reverse operation.
